# EUROPEAN PATENT APPLICATION

(11) **EP 2 226 536 A1**
(43) Date of publication of application: **08.09.2010**
(21) Application number: 08700656.5
(22) Date of filing: 16.01.2008
(51) Int. Cl.: F16K 5/06, F16K 3/22, F16L 3/26

(54) **A CONTROL BALL VALVE**

(30) Priority: 18.12.2007 CN 200720061753 U
(71) Applicant: Guangzhou Sinro (Fogang) Controls Co., Ltd., Fogang County Qingyuan City Guangdong 510000 (CN)
(72) Inventor: Tan, Zhongxi, Guangzhou, Guangdong 510000 (CN)
(74) Representative: Mittler, Enrico
(86) International application number: PCT/CN2008/000106
(87) International publication number: WO 2009/079888

(57) **Abstract**

A control ball valve includes a valve body (1), in the valve body (1) is formed a flow passage for fluid to flow through, the flow passage comprises an inlet end (2) and an outlet end (5), the inlet end (2) is a conic channel with a gradually reducing inlet port. The ball valve can reduce flow resistance of the fluid flowing into the chamber of the valve body, reduce pressure loss, and avoid generating large turbulence.

## Description

### FIELD OF THE INVENTION

This invention relates to a control ball valve.

### BACKGROUND OF THE INVENTION

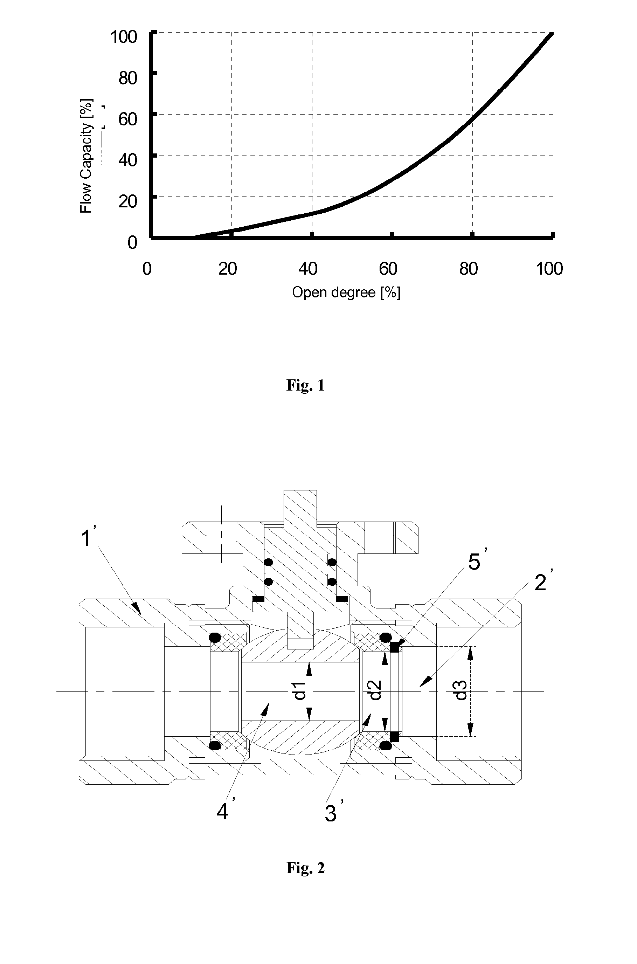

In the prior art, the flow characteristic curve is used for illustrating the result of the control ball valve in controlling the flow capacity. A satisfying flow characteristic curve obtained from an existing control seat valve is shown in Fig. 1. The curve is very smooth without any turning point from the opening degree zero to the fully open position, which illuminates the flow speed is even and without generating turbulence. However, this type of valve has a relatively complicated structure with high cost for manufacturing and maintenance, and thus it is not adapted to be promoted in the market.

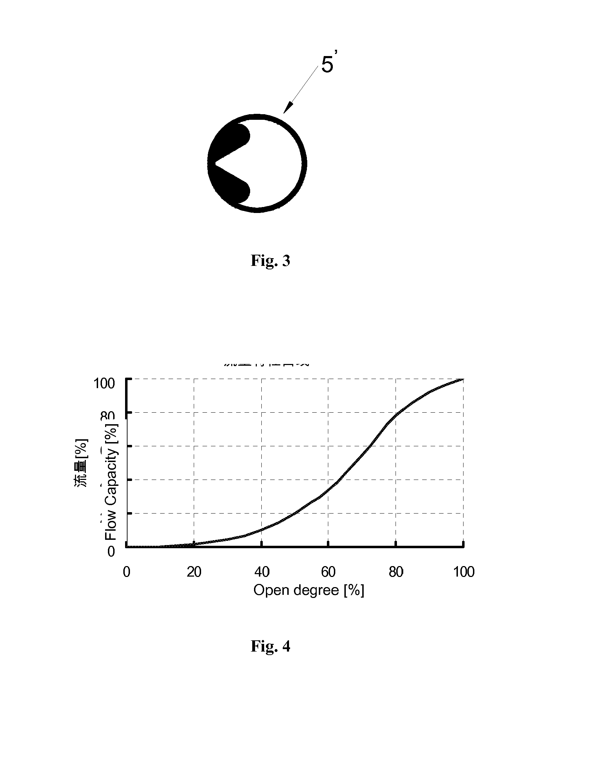

To make the structure of the valve simpler, U.S. Patent No. 6039304 with the Publication Date of March 21, 2000 discloses a ball valve with modified characteristics which includes, as shown in Fig. 2, a valve body l'having a fluid flow path through the valve body, and the inlet end 2'for the entry of the fluid flow is communicated in sequence with the first sealing seat channel 3'and the valve core 4'. In this structure, the joint between the inlet end 2' and the first sealing seat channel 3'is provided with a flow distribution disk 5'that is fixed on the passageway by a snap spring. As shown in Fig. 3, the disk 5'has a side surface that is a spherical surface and has a cross section in irregular shape, with a chamber inside for the passing through the fluid. The disk is used for sealing, and more importantly it is used for regulating the flow capacity through the shape arranged. The inlet end 2'of the ball valve has an inner diameter d3, the first sealing seat channel has an inner diameter d2, and the valve core 4'has an inner diameter d1. These three diameters are not identical with respect to each other. More importantly, after the fluid enters into the passageway via the inlet end, a relatively large turbulence, an increased pressure loss and an increased local flow resistance are generated due to the sudden decreasing of the inner diameter of the passageway. As shown in Fig. 4, the flow characteristic curve diagram is shown. The transverse axis represents the open degree for the flow, while the vertical axis represents the flow capacity. When the open degree is in a range of 0 to 70%, the curve is relatively flat, and when the open degree is at 70%, the turning point appears, and the curve becomes concave during the open degree is in a range of 70% to 100%. Although the flow capacity is controlled by the flow distribution disk 5', an expected flow characteristic curve still can not be obtained.

Another improved ball valve is developed based on the above described patent. This improved ball valve differs from the ball valve with the above structure in that: the flow distribution disk in the passageway is in different positions. In this ball valve, the flow distribution disk in mounted in the chamber of the valve core, and because of the unchanged design of the inlet end channel, there is still a step in the passageway, and therefore a turning point still appears when the open degree is at 70%, as shown in Fig. 4. A smooth flow characteristic curve like that in Fig. 1 can not be obtained either.

### SUMMARY OF THE INVENTION

Accordingly, it is an object of the present invention to provide a control ball valve which has a simple structure and can obtain a smooth flow characteristic curve such that the turning point on the flow characteristic curve in the prior art is removed.

To achieve the above object, the following technical solution is as follows:
A control ball valve comprises: a valve body with a fluid flow passageway extending through the valve body, the fluid flow passageway having an inlet end and an outlet end; wherein the inlet end is a conical channel with a gradually tapered inlet.

For the inlet end of the control ball valve is a conical channel with a gradually tapered inlet, the flow speed of the fluid is gradually reduced at the inlet end, the local flow resistance of the fluid and the pressure loss are also reduced. After the fluid enters into the valve chamber, the turbulence will not be generated, and therefore a smooth flow characteristic curve without any turning point can be obtained.

Preferably, the fluid flow passageway comprises a valve core channel communicated with the inlet end and the outlet end, the inlet end has a narrow end connected to the valve core channel, and the outlet end has a connecting end connected to the valve core channel. The inner diameter of the connecting end of the outlet end, the inner diameter of the valve core channel and the inner diameter of the narrow end are identical to each other. In this way, after the fluid enters into the fluid flow passageway from the conical inlet end, the local flow resistance of the fluid passing through the fluid flow passageway is relatively low, the variation is small, and the pressure loss is thus reduced, due to the inner diameter of the flow path in the valve body being identical. Therefore, no turbulence caused by the large variation of the inner diameter of the flow path at the inlet or in the passageway will occur, which ensures the smoothness of the flow characteristic curve in the entire range of the open degree from 0 to 100%.

Preferably, the fluid flow passageway further comprises a first sealing seat channel connected between the inlet end and the valve core channel, a second sealing seat channel connected between the valve core channel and the outlet end, both the inner diameter of the first sealing seat channel and the inner diameter of the second sealing seat channel are identical to that of the valve core channel. A sealing seat is provided on the sealing seat channel to prevent the fluid from leaking out from the inlet passageway at the inlet end.

Preferably, the outlet end is a conical channel with a gradually enlarged outlet. When the fluid flows out of the passageway, the fluid speed is increased because of the outlet end being gradually enlarged, and this further prevents the large turbulence from generating.

Preferably, the first sealing seat channel and the second sealing seat channel are respectively and symmetrically arranged on two ends of the fluid flow passageway.

Compared with the valve in the prior art, the present invention has the following advantages: for the inlet end of the fluid flow passageway is a conical channel with a gradually tapered inlet, the flow resistance of the fluid passing through the fluid flow passageway is relatively low, the pressure loss is reduced, the turbulence will not be generated. Without the need to provide a flow distribution disk, the present invention can obtain a smooth flow characteristic curve without any turning point. This control ball valve is simple in structure, easy in assembly, relatively low in manufacturing and maintenance.

### BRIEF DESCRIPTION OF THE DRAWINGS

Fig. 1 is a flow characteristic curve diagram of a known seat valve;
Fig. 2 is a schematic sectional view of a known ball valve;
Fig. 3 is a schematic structural view of a flow distribution valve in the prior art;
Fig. 4 is a flow characteristic curve diagram of a known ball valve;
Fig. 5 is a schematic sectional view of the ball valve according to the present invention.

Wherein: 1 '. valve body; 2 '. inlet end; 3 '. first sealing seat channel; 4 '. valve core channel; 5 ' . flow distribution disk; 1. valve body; 2. inlet end; 21. narrow end; 3. first sealing seat channel; 31. second sealing seat channel; 4. valve core channel; 5. outlet end.

### DETAILED DESCRIPTION OF THE PREFERRED EMBODIMENT

Many aspects of the present invention will be described in detail with reference to the accompanying drawings.

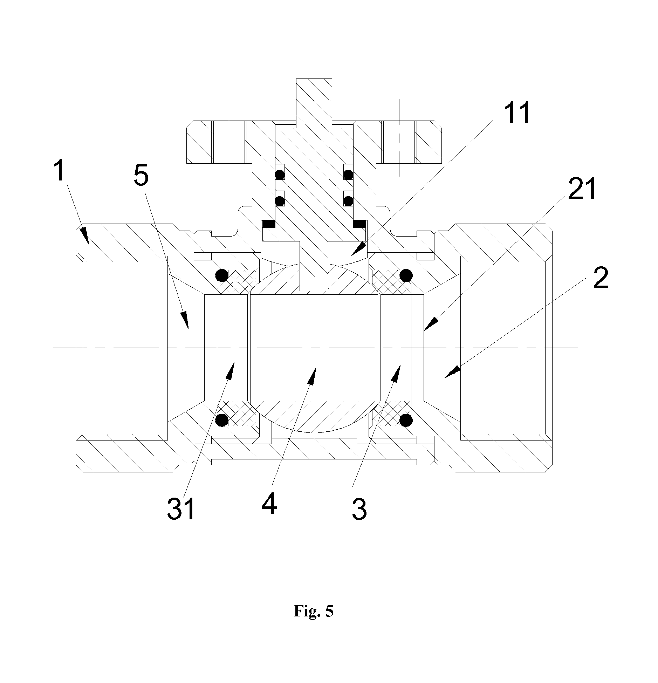

Referring to Fig. 5, a control ball valve includes a valve body 1 having a valve seat 11, and the two ends of the valve seat 11 are respectively connected to the inlet end 2 and the outlet end 5. A flow passageway extends through the valve body 1. The valve seat 11 has at its center a spherical valve core with a valve core channel extending through the valve core. The valve core channel forms the entire flow passageway, together with the channels on both sides of the valve core channel. The fluid flow passageway has at one end an inlet end 2 that is a conical channel with a gradually tapered inlet.

The fluid flow passageway further comprises a first sealing seat channel 3 and the valve core channel 4 connected together in sequence. The inlet end 2 has a narrow end 21 connected with the first sealing seat channel 3. Both the inner diameter of the first sealing seat channel 3 and the inner diameter of the valve core channel 4 are identical to that of the inner diameter of the narrow end 21. The other end of the valve core channel 4 is connected in sequence with the second sealing passageway 31 and the outlet end 5. The outlet end 5 has a connecting end connected with the second sealing seat channel 31 or the valve core channel (when the outlet end is directly connected with the valve body passageway). The inner diameter of the connecting end is identical to that of the second sealing seat channel 31, or when the outlet end is directly connected with the valve core channel 4, the inner diameter of the connecting end is identical to that of the valve core channel 4. That is to say, the inner diameter of the entire fluid flow passageway is always the same. In this way, after the fluid enters into the valve body from the inlet, the fluid will flow through a path with the same inner diameter such that the flow resistance of the fluid is reduced and the pressure loss is also reduced.

Furthermore, the outlet end 5 may be a conical channel with a gradually enlarged outlet.

Still further, the outlet end 5 and the inlet end 2 may be respectively and symmetrically arranged on two ends of the fluid flow passageway, while the first sealing seat channel 3 and the second sealing seat channel 31 may also be respectively and symmetrically arranged on two ends of the fluid flow passageway.

## Claims

1. A control ball valve, comprising:
a valve body (1) with a fluid flow passageway extending through the valve body, the fluid flow passageway having an inlet end (2) and an outlet end (5);
**characterized in that** the inlet end (2) is a conical channel with a gradually tapered inlet.

2. The control ball valve of claim 1, **characterized in that** the fluid flow passageway comprises a valve core channel (4) communicated with the inlet end (2) and the outlet end (5), the inlet end (2) has a narrow end (21) connected to the valve core channel (4), the outlet end (5) has a connecting end connected to the valve core channel (4), and the connecting end having an inner diameter identical to the inner diameter of the narrow end (21).

3. The control ball valve of claim 2, **characterized in that** the fluid flow passageway further comprises a first sealing seat channel (3) connected between the inlet end (2) and the valve core channel (4), a second sealing seat channel (31) connected between the valve core channel (4) and the outlet end (5), both the inner diameter of the first sealing seat channel (3) and the inner diameter of the second sealing seat channel (31) are identical to that of the valve core channel (4).

4. The control ball valve of claim 1, 2 or 3, **characterized in that** the outlet end (5) is a conical channel with a gradually enlarged outlet.

5. The control ball valve of claim 3, **characterized in that** the first sealing seat channel (3) and the second sealing seat channel (31) are respectively and symmetrically arranged on two ends of the fluid flow passageway.
